Europäisches Patentamt

European Patent Office

Office européen des brevets

(11) Veröffentlichungsnummer: **0 048 404**
B1

# (12) EUROPÄISCHE PATENTSCHRIFT

(45) Veröffentlichungstag der Patentschrift:
05.02.86

(51) Int. Cl.⁴: **G 02 B 21/00**

(21) Anmeldenummer: 81107127.3

(22) Anmeldetag: 10.09.81

(54) Verstellbares Stativ für optische Beobachtungsgeräte.

(30) Priorität: 18.09.80 DE 3035165

(43) Veröffentlichungstag der Anmeldung:
31.03.82 Patentblatt 82/13

(45) Bekanntmachung des Hinweises auf die Patenterteilung:
05.02.86 Patentblatt 86/6

(84) Benannte Vertragsstaaten:
CH DE FR GB LI

(56) Entgegenhaltungen:
DE - A - 2 604 927
DE - B - 1 048 474
DE - C - 616 538
DE - C - 860 447
DE - U - 1 713 867
US - A - 3 776 614

(73) Patentinhaber: Firma Carl Zeiss, D-7920 Heidenheim
(Brenz) (DE)

(72) Erfinder: Biber, Klaus, Ing.grad., Jahnstrasse 39, –
D-7080 Aalen (DE)
Erfinder: Grünvogel, Karl, Spiesshoferring 49,
D-7080 Aalen (DE)
Erfinder: Lemcke, Ulrich, Ing.grad., Hauptstrasse 32,
D-7920 Heidenheim 8 (DE)
Erfinder: Jakubowski, Heinz, Ing.grad.,
Lerchenstrasse 1, D-7082 Oberkochen (DE)
Erfinder: Schulz, Kurt, Ing.grad., Mozartweg 20,
D-7082 Oberkochen (DE)

**Beschreibung**

Die Erfindung betrifft ein verstellbares Stativ für optische Beobachtungsgeräte, insbesondere Operationsmikroskope, mit einem Stativfuß, einer Stativsäule und einem als Gelenkparallelogramm ausgebildeten Tragarm, in dem zum Ausgleich des Gewichtes des verwendeten Beobachtungsgerötes eine Feder angeordnet ist.

Operationsmikroskope müssen sehr feinfühlig horizontal und vertikal bewegt werden. Deshalb ist es erforderlich, das Gewicht des am Stativ befestigten Operationsmikroskopes durch ein Gegengewicht zu kompensieren. Da am Operationstisch die Platzverhöltnis sehr beengt sind, ist für das Stativ außerdem eine kompakte und geschlossene Bauweise wünschenswert.

Aus der DE-C- 21 61 896 und der DE-A- 23 20 266 sind verstellbare Stative für optische Beobachtungsgeröte bekannt, die das Gerötegewicht durch ein Gegengewicht kompensieren. Bei einem Gerötegewicht von beispielsweise 15 kp muß das Gegengewicht ebenfalls 15 kp schwer sein, damit die erforderliche Feinfühligkeit am Beobachtungsgeröt erreicht wird. Trotz eines optimalen Gewichtsausgleichs ist aber durch den Benutzer dann eine sehr große Masse zu bewegen, die je nach Verstellgeschwindigkeit ein mehr oder weniger großes Verstellmoment erfordert. Außerdem benötigt das Ausgleichsgewicht einen betröchtlichen freien Raum für die ungehinderte Bewegung. Da die Geröteausrüstungen je nach Einsatzgebiet und den speziellen Anforderungen einer Operation sehr unterschiedlich sind, müssen auch die Ausgleichsgewichte sehr unterschiedlich sein. Ein exakter Gewichtsausgleich stellt deshalb eine zusötzliche Anforderung an das Bedienungspersonal.

Aus dem Prospekt M1600-le-III.80 der Firma Wild, Heerbrugg, ist ein Stativ bekannt, das als Gewichtsausgleich eine Gasfeder verwendet. Nachteilig bei diesem bekannten Stativ ist, daß durch die Reibung am Kolben und an der Kolbenstange ein unausgeglichenes Restmoment bleibt, wodurch die Feinfühligkeit des Gerötes beeinträchtigt wird. Außerdem ergibt sich bei der Gasfeder eine offene und sperrige Bauweise, die am Operationstisch ebenfalls unerwünscht ist.

Aus der US-A-3 776 614 ist ein Stativ bekannt, bei dem in einem Gelenkparallelogramm eine Feder angebracht ist, mit der eine Gegenkraft zu der durch das Beobachtungsgerät hervorgerufenen Kraft erzeugt wird. Diese Feder ist jedoch auf das Gewicht eines bestimmten Beobachtungsgerötes abgestimmt, so daß Veröndrungen an diesem oder ein Wechsel des Beobachtungsgerötes zu einem unvollstöndigen Gewichtsausgleich führen.

Der Erfindung liegt deshalb die Aufgabe zugrunde, ein Stativ anzugeben, mit dem bei geringstem Platzbedarf beliebige Gerötegewichte durch das Bedienungspersonal rasch und einfach ausgeglichen werden können, und das eine feinfühlige Verstellung des Gerötes ermöglicht. Außerdem war es Aufgabe der Erfindung, die Versorgungsleitungen (elektrische Stromzuführung, Lichtleiter) so zu führen, daß eine optimale Betriebssicherheit erreicht und der Chirurg nicht behindert wird. Darüberhinaus sollte der Stativfuß eine Form erhalten, die eine optimale Standsicherheit mit bedarfsweise leichter Beweglichkeit des Stativs verbindet.

Die gestellte Aufgabe wird erfindungsgemöß dadurch gelöst, daß ein Angriffspunkt für die Feder auf einer Ortskurve derart verstellbar ist, daß sich sowohl die Federkraft als auch der zugehörige Kraftarm so verändern, daß für Beobachtungsgeröte unterschiedlichen Gewichts ein innerhalb eines bestimmten Verstellwinkels des Gelenkparallelogramms praktisch konstanter Gewichtsausgleich einstellbar ist.

In einer vorteilhaften Ausführungsform ist die Ortskurve eine Gerade, welche mit der Verbindungslinie der Drehpunkte des Parallelogrammes einen Winkel von vorzugsweise 18 bis 24° bildet.

In einer besonders vorteilhaften Ausführungsform ist die Ortskurve ein Kreisbogen mit einem Radius von vorzugsweise 40 bis 60 mm, wobei in der Mittelstellung des Ausgleicharms die Tangente am Argriffspunkt mit der Verbindungslinie der Drehpunkte des Parallelogrammes einen Winkel von 18 bis 24° bildet.

Eine geschlossene Bauform des Parallelogramms wird dadurch erreicht, daß es aus zwei U-Profilen besteht, die zueinander verschiebbar angeordnet sind und deren Hohlraum die Versorgungskabel aufnimmt.

Eine erhöhte Sicherheit bei der Handhabung wird dadurch gewöhrleistet, daß zwischen den U-Profilen ein verstellbarer Anschlag vorgesehen ist, der die vertikale Bewegung der U-Profile begrenzt.

Die für die Beleuchtung des Beobachtungsgerötes erforderlichen Versorgungskabel sowie Lichtleiter können unsichtbar und geschützt im Innern des Stativs verlegt werden.

Vorteilhafterweise ist der Stativfuß T-förmig ausgeführt und mit je zwei Rollen in den querbalken und mit einer Rolle im Längsbalken ausgerüstet.

Die mit der Erfindung erzielten Vorteile bestehen insbesondere in der feinfühligen horizontalen und vertikalen Bewegungsmöglichkeit des Beobachtungsgerätes sowie in der geschlossenen und kompakten Bauweise.

Ein Ausführungsbeispiel der Erfindung ist in der Zeichnung dargestellt und wird im folgenden näher beschrieben. Es zeigen

Fig. 1 eine Gesamtansicht des erfindungsgemäßen Stativs;

Fig. 2 einen Teilschnitt durch das erfindungsgemäße Stativ;

Fig. 3 einen Teilschnitt durch den verstellbaren Ausgleichsarm mit einer Zugfeder zum Ausgleich des Gewichts;

Fig. 4 einen Teilschnitt durch den verstellbaren Ausgleichsarm mit einer Druckfeder zum Ausgleich des Gewichts;

Fig. 5 einen Teilschnitt durch die Stativsäule;

Fig. 6 eine Draufsicht auf den Stativfuß.

2

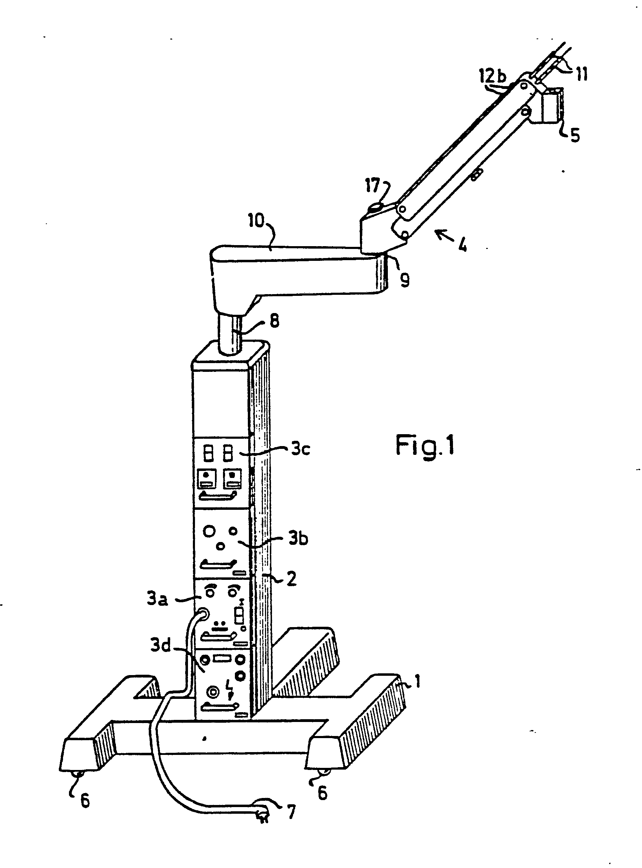

Aus der Gesamtansicht der Fig. 1 geht die kompakte und platzsparende Ausführung des 8tativs anschaulich hervor.

Es ist mit 1 der Stativfuß bezeichnet, mit 2 die Stativsäule, mit 3 Einschübe für die Versorgungskabel und mit 4 der Ausgleicharm. In 5 ist die Aufnahme für das verwendete Beobachtungsgerät. Der Ausgleicharm 4 ist über ein Gelenk 9 mit einem Schwenkarm 10 verbunden, der um die Achse 8 drehbar ist. Das in den Figure, 1, 2 und 5 gezeigte Ausführungsbeispiel ist mit insgesamt vier Versorgungseinschüben 3a bis 3d ausgerüstet. 3a ist der Einschub für die Standardousrüstung; 3b der Einschub für Spezialgeräte, und durch 3c werden die Lichtleiter verscrgt. 3d ist der Versorgungseinschub für die Foto-,Film- und Fernsehadaption. Wenn nur weniger Einschübe benötigt werden. können die freien Öffnungen durch Blindbleche verschlossen werden. Mit 6 sind die sichtbaren Rollen des Stotivfußes bezeichnet und mit 7 der Anschlußstecker für das Stromnetz. 11 kennzeichnet die Lichtleiter und 12b diverse Buchsen für die elektronische Versorgung der Geräte. Der Verstellknopf für die Ausgleichsfeder ist mit 17 bezeichnet.

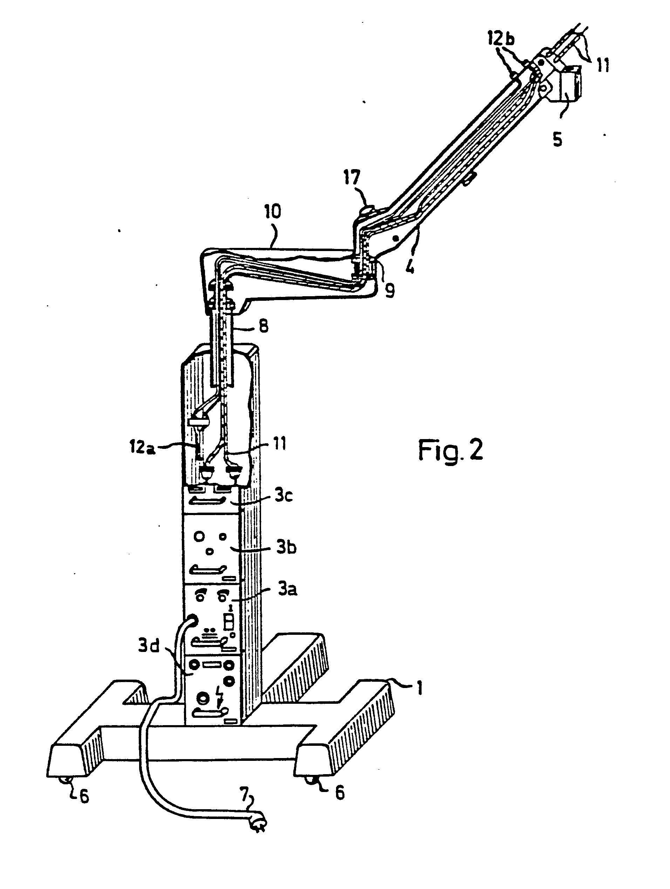

In den in Fig. 2 gezeigten Teilschnitt sind die Versorgungskabel mit 12a bezeichnet. Die übrigen Bezeichnungen sind dieselben wie in Fig. 1.

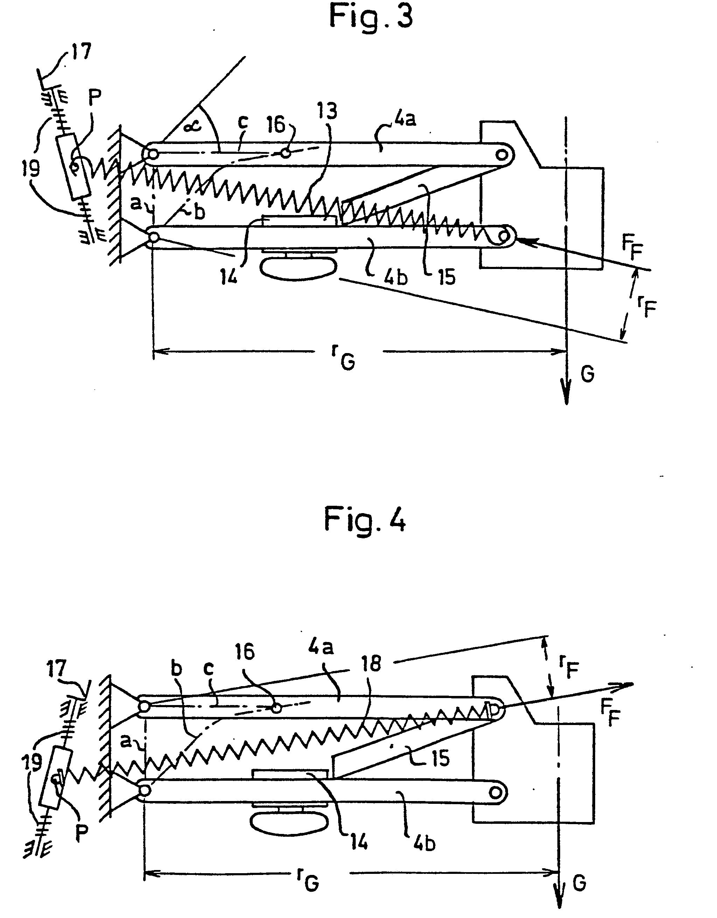

Die Fig. 3 und 4 zeigen die Verstellbarkeit des Gewichtsausgleiches im Ausgleicharm 4. Zwischen den als U-Profilen ausgebildeten Schienen 4a und 4b ist in Fig. 3 die Zugfeder 13 so angeordnet, daß durch Verlagerung des Angriffpunktes P das Produkt aus Gewicht G und Gewichtsarm $r_G$ gleich dem Produkt aus Federkraft $F_F$ und Kraftarm $r_F$ erzielt wird, also

$$G \times r_G = F_F \times r_F$$

Für unterschiedliche Gewichte G des Beobachtungsgerätes wird durch Verschieben des Angriffpunktes P sowohl die Federkraft $F_F$ als auch der Kraftarm $r_F\alpha$ derart verändert, daß der Gewichtsausgleich über den Verstellwinkel $\pm\alpha$ für den praktischen Gebrauch ausreichend konstant ist. Die Ortskurve von P als Funktion des Gewichtes kann durch mathematische Näherungsrechnungen oder empirisch ermittelt werden. In einer vorteilhaften Ausführungsform ist die Ortskurve für P eine Gerade, welche mit der Verbindungslinie a der beiden Drehpunkte der Schienen 4a und 4b einen Winkel von vorzugsweise 18 bis 2d° bildet. In einer besonders vorteilhaften Ausführungsform ist die Ortskurve für P als Kreisbogen mit einem Radius von vorzugsweise 40 bis 60 mm ausgebildet, wobei in der Mittelstellung des Ausgleicharmes 4 die Tangente am Angriffpunkt P mit der Verbindungslinie a einen Winkel von 18 bis 24° bildet. Die Verstellung des Angriffpunktes P erfolgt durch den mit 17 bezeichneten Verstellknopf über die mit 19 bezeichnete Gewindespindel. In den Fig. 3 und 4 ist der Angriffpunkt P wegen der besseren Ubersichtlichkeit am linken Rand gezeichnet. Um einen ausreichend großen Verstellwinkel zu erreichen, wird die Ortskurve für P durch nicht gezeichnete mechanische Ubertragungsglieder in die Nähe der Verbindungslinie a gelegt. Dabei kann ein besonders exakter Gewichtsausgleich für alle Verstellwinkel durch ein zusätzliches Verstellelement erreicht werden, das mit einer der Schienen 4a oder 4b verbunden ist und die Lage des Angriffspunktes von P in Abhängigkeit vom Verstellwinkel beeinflußt.

Die Zugfeder 13 hat gegenüber dem aus dem Stand der Technik bekannten Gewichtsausgleich mit Gasfedern den Vorteil, daß sie hysterefrei arbeitet und eine kompakte und geschlossene Bauweise ermöglicht. Der Hub nach unten ist durch einen verstellbaren Anschlag 14, auf den die Schwinge 15 auftrifft, begrenzt. Das Feststellen des Ausgleichsarmes in einer beliebigen Hähe wird durch die Klemmung 16 erreicht. Dabei ist im Dreieck mit den festen Seiten a und c ein geknickter Stab mit der variablen Länge b geklemmt. Im freien Raum des Ausgleichsarms ist die vollständige Innenverkabelung, die in der Abbildung der Fig. 3 nicht dargestellt ist, möglich.

In der Darstellung der Fig. 4 ist ein Ausgleicharm mit einer Druckfeder dargestellt. Teile, die der Ausführung nach Fig. 3 entspreche,, tragen dieselben Bezugszeichen. Die Druckfeder ist mit 18 bezeichnet.

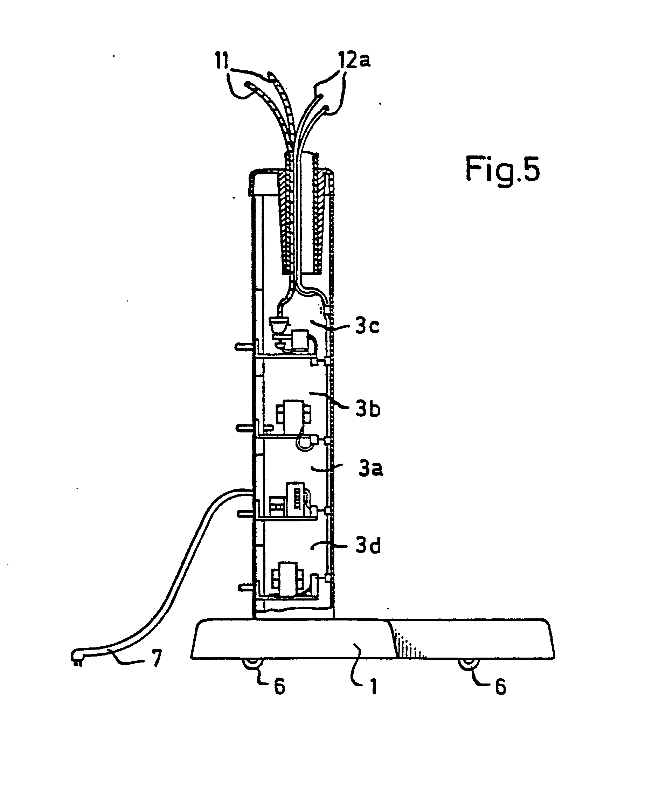

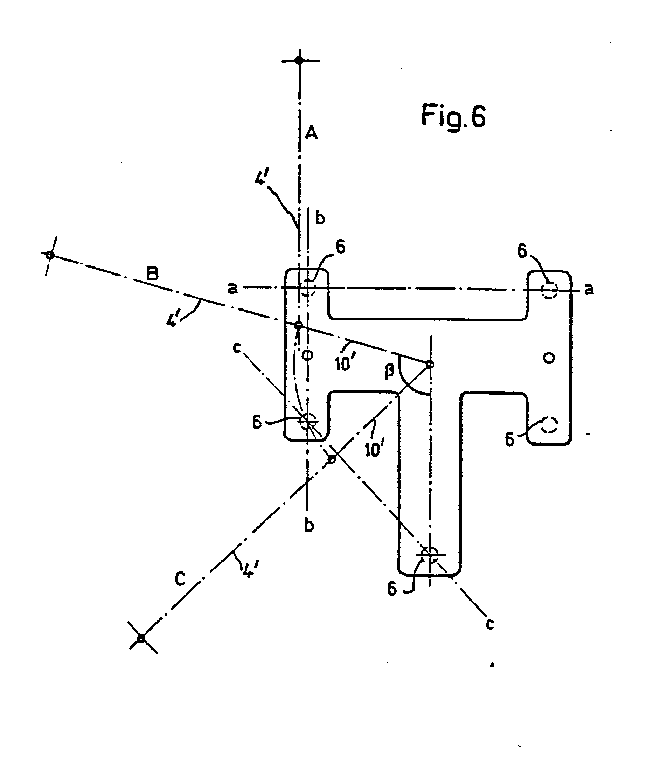

In Fig. 5 ist die Stativsäule im Teilschnitt dargestellt, sie zeigt die maximale Ausrüstung der Säule mit den 4 Versargungseinschübe Dabei ist ei,e Gesaltu,g des Stativfußes gezeigt, die ei,e optimale Standsicherheit gewöhrleistet. Dabei ist die Lage der Stativfußrolle, mit 6 bezeich,et. Insgesamt werden für den Stativfuß nach Fig. 6 fünf Rollen verwendet. Die möglichen Kippachsen des Statives sind mit aa, bb und cc bezeichnet und die dazu gehörenden extremen Auslenkungen 10' und 4' des Schwenkarmes 10 und des Ausgleicharmes 4 sind mit A, 8 und C bezeichnet. Die Drehbarkeit des Schwenkarmes 10 ist zugunsten der Standsicherheit auf den Winkel $\pm\beta$ begrenzt.

Für eine erweiterte Schwenk- und Hubmöglichkeit des Operationsmikros- kopes ist ein Doppel- ader Mehrfachscherenarm möglich, wabei zwei ader mehr der beschriebenen Gelenkparallelagramme zusammenwirken. Die Verbindung der Gelenkparallelogramme kann je nach Bedarf starr oder gelenkig sein.

## Patentansprüche:

1. Verstellbares Stativ für optische Beobachtungsgeräte, insbesondere Operationsmikroskope, mit einem Stativfuß, einer Stativsäule und einem als Gelenkparallelogramm ausgebildeten Tragarm, in dem zum Ausgleich des Gewichtes des verwendeten Beobachtungsgerätes eine Feder (13,18) angeordnet ist, dadurch gekennzeichnet, daß ein Angriffspunkt (P) der Feder auf einer Ortskurve derart verstellbar ist, daß sich sawohl die Federkraft ($F_F$) als auch der zugehörige Kraftarm ($r_F$) sa verändern, daß für Beobachtungsgeräte unterschiedlichen Gewichts ein innerhalb eines bestimmten Verstellwinkels ($\pm\alpha$) des Gelenkparallelogramms

praktisch konstanter Gewichtsausgleich einstellbar ist.

2. Verstellbares Stativ nach Anspruch 1, dadurch gekennzeichnet, daß die Ortskurve eine Gerade ist, welche mit der Verbindungslinie (a) der vam Beobachtungsgerät abgewandten Drehpunkte des Parallelogrammes einen Winkel von etwa 18 bis 24° bildet.

3. Verstellbares Stativ nach Anspruch 1, dadurch gekennzeichnet, daß die Ortskurve ein Kreisbogen mit einem Radius van vorzugsweise 40 bis 60 mm ist, wobei in der Mittelstellung des Ausgleicharms (4) die Tangente am Angriffspunkt (P) mit der Verbindungslinie (a) der vam Beobachtungsgerät abgewandten Drehpunkte des Parallelogrammes einen Winkel van 18 bis 24° bildet.

4. Verstellbares Stativ nach einem der Ansprüche 1 bis 3, dadurch gekennzeichnet, daß zwischen den Schienen (4a,4b) des Ausgleicharmes (4) ein verstellbarer Anschlag (14) vorgesehen ist, der die vertikale Bewegung der Schienen begrenzt.

5. Verstellbares Stativ nach einem der Ansprüche 1 bis 4, dadurch gekennzeichnet, daß der Ausgleicharm (4) aus zwei U-Profilen (4a,4b) besteht, die zueinander verschiebbar angeordnet sind.

6. Verstellbares Stativ nach einem der Ansprüche 1 bis 5, dadurch gekennzeichnet, daß die für das Beobachtungsgerät erforderlichen Versargungskabel sowie Lichtleiter unsichtbar im Inneren des Stativs und des Ausgleicharmes (4) verlegt sind.

7. Verstellbares Stativ nach einem der Ansprüche 1 bis 6, dadurch gekennzeichnet, daß der Stativfuß T-färmig ausgeführt und mit je zwei Rallen (6) in den Querbalken und mit einer Rolle (6) im Löngsbalken ausgerüstet ist.

## Claims:

1. An adjustable stand for optocal observation instruments, particularly operation microscopes having a stand base, a stand column and a supporting arm, which is developed as a link parallelogram, in which is provided a spring (13, 18) in order to compensate for the weight of the applied observation instrument, characterized by the fact that one reference point (P) for the spring is displaceable on a locuscurve in such a way that as well the spring force ($F_F$) as the accompanying force arm ($r_F$) change to such a degree that for observation instruments of different weight a practically constant weight equalization is adjustable within a stated adjustment angle ($\pm \alpha$).

2. An adjustable stand according to claim 1, characterized by the fact that the locuscurve is a straight line which forms an angle of preferably 18 to 24° with the line (a) connecting the points of articulation of the parallelogram opposite the observation instrument.

3. An adjustable stand according to claim 1, characterized by the fact that the locuscurve is a circular arc having a radius of preferably 40 to 60 mm, the tangent to the reference point (P) forming an angle of 18 to 24° with the line (a) connecting the points of articulation of the parallelogram opposite the observation instrument when the compensating arm (4) is in the middle position.

4. An adjustable stand according to one of the claims 1 to 3, characterized by the fact that between the profiles (4a, 4b) of the compensating arm (4) there is provided an adjustable stop (14) which limits the vertical movement of the profiles.

5. An adjustable stand according to one of the claims 1 to 4, characterized by the fact that the compensating arm (4) consist of U-shaped profiles (4a, 4b), displaceable with respect to each other.

6. An adjustable stand according to one of the claims 1 to 5, characterized by the fact that the supply cables necessary for the observation instrument as well as optical guides are arranged invisibly within the stand and the compensating arm (4).

7. An adjustable stand according to one of the claims 1 to 6, characterized by the fact that the stand base is of T shape and has two rollers (6) each in the transverse beams and one roller (6) in the longitudinal beam.

## Revendications

1. Statif reglable pour appareils d'observation optiques, en particulier pour microscopes d'operation, comprenant un pied de statif, une colonne de statif et un bras de support realise comme un parallelogramme articule, dans lequel est disposé un ressort (13, 18) pour la compensation du poids de l'appareil d'observation utilise, caractérisé en ce qu'un point d'attaque (P) du ressort est disposé réglable sur un lieu geometrique,de manière qu'à la fois la force ($F_F$) du ressort et son bras de levier ($r_F$) changent de telle façon qu'une compensation de poids pratiquement constante pour des appareils d'observation de différents poids peut être ajustée dans un angle de réglage ($+\alpha$) déterminé du parallèlogramme articulé.

2. Statif selon la revendication 1, caracterise en ce que le lieu géométrique est une droite qui forme un angle d'environ 18 à 24° avec la ligne de liaison (a) des points d'articulation du parallélogramme éloignés de l'appareil d'observation.

3. Statif selon la revendication 1, caractérise en ce que le lieu geometrique est un arc de cercle ayant de préférence un rayon de 40 à 60 mm, la tangente au point d'attaque (P) formant un angle de 18 à 24° avec la ligne de liaison (a) des points .d'articulation du parallélogramme éloignés de l'appareil d'observation ü la position médiane du bras de compensation (4).

4. Statif selon une des revendications 1 à 3, caracterise en ce qu'une butée réglable (14) qui limite le mouvement vertical des barres (4a, 4b) formant le bras de compensation (4) est disposée entre ces barres.

5. Statif selon une des revendications 1 à 4, caractérisé en ce que le bras de compensation (4) est forme de deux profilés en U (4a, 4b) qui sont disposés déplaçables l'un par rapport à l'autre.

6. Statif selon une des revendications 1 à 5, caractérisé en ce que les câbles d'alimentation nécessaires pour l'appareil d'observation, ainsi que les conducteurs de lumière, sont disposes invisibles à l'interieur du statif et du bras de compensation (4).

7. Statif selon une des revendications 1 à 6, caractérisé en ce que son pied est en forme de T et est équipé de deux roulettes (6) dans la barre transversale et d'une roulette (6) dans la barre longitudinale.

Fig.1

Fig. 2

# Fig. 3

# Fig. 4

Fig.5

Fig.6